# EUROPÄISCHE PATENTSCHRIFT

(11) **EP 2 059 662 B1**
(45) Veröffentlichungstag und Bekanntmachung des Hinweises auf die Patenterteilung: **20.04.2011**
(21) Anmeldenummer: 07819970.0
(22) Anmeldetag: 28.08.2007
(51) Int. Cl.: F02C 6/12, F02B 37/18, G01P 3/487

(54) **WASTE-GATE-AKTUATOR FÜR EINEN ABGASTURBOLADER**
WASTE GATE ACTUATOR FOR AN EXHAUST GAS TURBOCHARGER
ACTIONNEUR DE SOUPAPE DE DÉCHARGE POUR UN TURBOCOMPRESSEUR À GAZ D'ÉCHAPPEMENT

(30) Priorität: 30.08.2006 DE 102006040667
(43) Veröffentlichungstag der Anmeldung: 20.05.2009
(73) Patentinhaber: Continental Automotive GmbH, 30165 Hannover (DE)
(72) Erfinder: GILCH, Markus, 85419 Mauern (DE); HEINRICH, Stephan, 84076 Pfeffenhausen (DE)
(86) Internationale Anmeldenummer: PCT/EP2007/058903
(87) Internationale Veröffentlichungsnummer: WO 2008/025754

(56) Entgegenhaltungen:
- WO-A-2006/045680
- WO-A-2007/033914
- WO-A-2007/085535
- DE-A1-102005 010 921
- US-A- 4 817 387

## Beschreibung

Die Erfindung betrifft einen Waste-Gate-Aktuator für einen Abgasturbolader, mit einem Aktuatorgehäuse und einem Aktuatordeckel, wobei in dem Waste-Gate-Aktuator ein Element zur Betätigung des Waste-Gate-Ventils und elektronische Bauelemente zur Ansteuerung des Elements zur Betätigung des Waste-Gate-Ventils angeordnet sind.

Die von einer Brennkraftmaschine erzeugte Leistung hängt von der Luftmasse und der Kraftstoffmenge ab, die der Brennkraftmaschine zugeführt werden kann. Will man die Leistung der Brennkraftmaschine steigern, ist es notwendig mehr Verbrennungsluft und Kraftstoff zuzuführen. Diese Leistungssteigerung wird bei einem Saugmotor durch eine Hubraumvergrößerung oder durch die Erhöhung der Drehzahl erreicht. Eine Hubraumvergrößerung führt aber grundsätzlich zu schwereren in den Abmessungen größeren und damit teureren Brennkraftmaschinen. Die Steigerung der Drehzahl bringt besonders bei größeren Brennkraftmaschinen erhebliche Probleme und Nachteile mit sich.

Eine viel genutzte technische Lösung zur Steigerung der Leistung einer Brennkraftmaschine ist die Aufladung. Damit bezeichnet man die Vorverdichtung der Verbrennungsluft durch einen Abgasturbolader oder auch mittels eines vom Motor mechanisch angetriebenen Verdichters. Ein Abgasturbolader besteht im Wesentlichen aus einem Verdichter und einer Turbine, die mit einer gemeinsamen Welle verbunden sind und mit der gleichen Drehzahl rotieren. Die Turbine setzt die normalerweise nutzlos verpuffende Energie des Abgases in Rotationsenergie um und treibt den Verdichter an. Der Verdichter, der in diesem Zusammenhang auch als Kompressor bezeichnet wird, saugt Frischluft an und fördert die vorverdichtete Luft zu den einzelnen Zylindern des Motors. Der größeren Luftmenge in den Zylindern kann eine erhöhte Kraftstoffmenge zugeführt werden, wodurch die Verbrennungskraftmaschine mehr Leistung abgibt. Der Verbrennungsvorgang wird zudem günstig beeinflusst, so dass die Verbrennungskraftmaschine einen besseren Gesamtwirkungsgrad erzielt. Darüber hinaus kann der Drehmomentverlauf einer mit einem Turbolader aufgeladenen Brennkraftmaschine äußerst günstig gestaltet werden.

Bei Fahrzeugherstellern vorhandene Seriensaugmotoren können durch den Einsatz eines Abgasturboladers ohne große konstruktive Eingriffe an der Brennkraftmaschine wesentlich optimiert werden. Aufgeladene Brennkraftmaschinen haben in der Regel einen geringeren spezifischen Kraftstoffverbrauch und weisen eine geringere Schadstoffemission auf. Darüber hinaus sind Turbomotoren in der Regel leiser als Saugmotoren gleicher Leistung, da der Abgasturbolader selbst wie ein zusätzlicher Schalldämpfer wirkt.

Bei Brennkraftmaschinen mit einem großen Betriebsdrehzahlbereich, zum Beispiel bei Brennkraftmaschinen für Personenkraftwagen, wird schon bei niedrigen Motordrehzahlen ein hoher Ladedruck gefordert. Dafür wird bei diesen Turboladern ein Ladedruckregelventil, ein so genanntes Waste-Gate-Ventil, eingeführt. Durch die Wahl eines entsprechenden Turbinengehäuses wird schon bei niedrigen Motordrehzahlen schnell ein hoher Ladedruck aufgebaut. Das Waste-Gate-Ventil begrenzt dann bei steigender Motordrehzahl den Ladedruck auf einen gleich bleibenden Wert.

Bei zunehmender Abgasmenge kann die maximal zulässige Drehzahl der Kombination aus dem Turbinenrad, dem Kompressorrad und der Turbowelle, die auch als Laufzeug des Abgasturboladers bezeichnet wird, überschritten werden. Bei einer unzulässigen Überschreitung der Drehzahl des Laufzeuges würde dieses zerstört werden, was einem Totalschaden des Turboladers gleichkommt. Gerade moderne und kleine Turbolader mit deutlich kleineren Turbinen- und Kompressorraddurchmessern, die durch ein erheblich kleineres Massenträgheitsmoment ein verbessertes Drehbeschleunigungsverhalten aufweisen, werden vom Problem der Überschreitung der zulässigen Höchstdrehzahl betroffen. Je nach Auslegung des Turboladers führt schon eine Überschreitung der Drehzahlgrenze um etwa 5 % zur kompletten Zerstörung des Turboladers.

Zur Drehzahlbegrenzung haben sich die Waste-Gate-Ventile bewährt, die nach dem Stand der Technik von einem aus dem erzeugten Ladedruck resultierenden Signal angesteuert werden. Überschreitet der Ladedruck einen vorgegebenen Schwellwert, so öffnet das Waste-Gate-Ventil und leitet einen Teil des Abgasmassenstroms an der Turbine vorbei. Diese nimmt wegen des verringerten Massenstroms weniger Leistung auf, und die Kompressorleistung geht in gleichem Maße zurück. Der Ladedruck und die Drehzahl des Turbinenrades und des Kompressorrades werden verringert. Diese Regelung ist jedoch relativ träge, da der Druckaufbau bei einer Drehzahlüberschreitung des Laufzeuges mit einem zeitlichen Versatz erfolgt. Deshalb muss die Drehzahlregelung für den Turbolader mit der Ladedrucküberwachung im hochdynamischen Bereich (Lastwechsel) durch entsprechend frühzeitige Ladedruckreduzierung eingreifen, was zu einem Wirkungsgradverlust führt.

Das Dokument US 4817387 offenbart einen Abgasturbolader mit einem Sensor am kompressorseitigen Ende der Turbowelle zur direkten Messung der Drehzahl der Turbowelle. Der Sensor wird hier durch das Kompressorgehäuse geführt und auf ein Element zur Variation eines Magnetfeldes gerichtet. Bei der Integration des Sensors im Kompressorgehäuse entstehen Abdichtungsprobleme, die auf Grund der hohen thermischen Belastung eines Abgasturboladers nur mit aufwendigen Eingriffen in die Bauweise des Abgasturboladers zu bewältigen sind.

Die Aufgabe der vorliegenden Erfindung ist es daher, ein System zur Drehzahlmessung am Abgasturbolader anzugeben, mit dem die Drehzahl der rotierenden Teile (Turbinenrad, Kompressorrad, Turbowelle) einfach und kostengünstig und ohne wesentliche bauliche Eingriffe in den Aufbau bestehender Abgasturbolader erfasst werden kann.

Diese Aufgabe wird erfindungsgemäß durch die Merkmale des unabhängigen Anspruchs 1 gelöst.

Wenn im oder am Aktuatorgehäuse oder im oder am Aktuatordeckel ein Sensor zur Erfassung der, durch die Drehung des Laufzeugs hervorgerufenen, Variation eines Magnetfeldes angeordnet ist, kann mit dem Aktuator auch die Drehzahl des Laufzeuges erfasst werden. Es ist kein separater Drehzahlsensor notwendig, wodurch elektrische Leitungen und Gehäuseteile eingespart werden. Der im oder am Aktuatorgehäuse oder im oder am Aktuatordeckel angeordnete Sensor gibt seine Signale direkt an den Aktuator weiter, wobei es im Aktuator nicht zur Störung der Signale durch von außen eingestrahlte elektromagnetische Impulse kommen kann. Mit dem vom Sensor erzeugten Signal kann sehr schnell und präzise das Waste-Gate-Ventil angesteuert werden, um eine Drehzahlüberschreitung des Laufzeuges zu vermeiden. Der Abgasturbolader kann somit immer sehr nahe an seiner Drehzahlgrenze betrieben werden, wodurch er einen optimalen Wirkungsgrad erreicht.

Bei einer Weiterbildung ist im Aktuatorgehäuse eine Leiterplatte angeordnet, auf der die elektronischen Bauelemente zur Ansteuerung des Elements zur Betätigung des Waste-Gate-Ventils und die elektronischen Bauelemente zur Auswertung der Sensorsignale angeordnet sind. Wenn auf einer einzigen Leiterplatte sowohl die elektronischen Bauelemente zur Ansteuerung des Elements zur Betätigung des Waste-Gate-Ventils als auch die elektronischen Bauelemente zur Auswertung der Sensorsignale angeordnet sind, können die Sensorsignale direkt zu Ansteuerung des Waste-Gate-Ventils verwendet werden. Das Gesamtsystem wird störungssicherer, weil elektrische Leiter, Lötstellen und Stecker entfallen und mit der Abschirmung der elektronischen Bauteile durch das Aktuatorgehäuses gegen elektromagnetische Wellen, ist das System gegen elektromagnetische eingestrahlte Störungen geschützt. Auch die kurzen Signallaufstrecken bewirken eine sichere Funktion des Systems.

Bei einer nächsten Weiterbildung weist der Sensor ein Hall-Sensorelement auf. Hall-Sensorelemente eignen sich sehr gut zur Erfassung der Variation eines Magnetfeldes und sind daher sehr gut zur Drehzahlerfassung zu verwenden. Hall-Sensorelemente sind sehr kostengünstig kommerziell zu erwerben und sie sind auch bei Temperaturen bis etwa 160°C einsetzbar.

Alternativ dazu ist das Sensorelement als magnetoresistives (MR) Sensorelement ausgebildet. MR Sensorelemente sind ihrerseits gut zur Erfassung der Variation eines Magnetfeldes geeignet und kostengünstig kommerziell erwerbbar.

Bei einer nächsten alternativen Ausgestaltung weist der Sensor ein induktives Sensorelement auf. Auch induktive Sensorelemente eigenen sich bestens zur Erfassung der Variation eines Magnetfeldes und sind bei relativ hohen Temperaturen einsetzbar.

Bei einer weiteren Ausgestaltung bestehen das Aktuatorgehäuse und/oder der Aktuatordeckel aus Aluminium. Aluminium ist robust und leicht und es schirmt elektromagnetische Wellen gut ab. Darüber hinaus ist es für das Magnetfeld gut durchlässig, womit die vom Element zur Variation des Magnetfeldes erzeugte Variation des Magnetfeldes gut erfasst werden kann, auch wenn der Sensor im Aktuatorgehäuse oder Aktuatordeckel angeordnet ist.

Alternativ dazu bestehen das Aktuatorgehäuse und/oder der Aktuatordeckel aus einem Kunststoff. Kunststoffe sind sehr preiswert und hinsichtlich ihrer Stabilität und Leichtigkeit vorteilhaft einsetzbar. Das aus Kunststoff bestehende Aktuatorgehäuse und/oder der aus Kunststoff bestehende Aktuatordeckel kann/können mit einem Metall überzogen werden, um eine Abschirmwirkung gegen äußere elektromagnetische Einflüsse zu erreichen. Für das Magnetfeld sind auch das mit Metall überzogene Kunststoffgehäuse und der mit Metall überzogene Kunststoffdeckel gut durchlässig. Ein Metallüberzug kann zum Beispiel durch Bedampfen des Kunststoffes erfolgen. Es ist auch denkbar dem Kunststoff Metallpartikel bei der Herstellung beizumengen, um die Abschirmwirkung gegen äußere elektromagnetische Einflüsse zu erzielen.

Ausführungsformen der Erfindung werden in den Figuren beispielhaft dargestellt. Es zeigt:
- Figur 1: einen üblichen Abgasturbolader,
- Figur 2: den Kompressor in einem Teilschnitt,
- Figur 3: einen Abgasturbolader mit Waste-Gate-Aktuator,
- Figur 4: den Waste-Gate-Aktuator mit dem Aktuatorgehäuse und dem Aktuatordeckel,
- Figur 5: noch einmal den Waste-Gate-Aktuator,
- Figur 6: den aus Fig. 5 bekannten Waste-Gate-Aktuator,
- Figur 7: abermals den Waste-Gate-Aktuator,
- Figur 8: einen Einblick in das Aktuatorgehäuse,
- Figur 9: beispielhaft den Aufbau des Sensors,
- Figur 10: eine andere Ausführungsform des Sensors und in
- Figur 11: das geöffnete Aktuatorgehäuse mit der Leiterplatte.

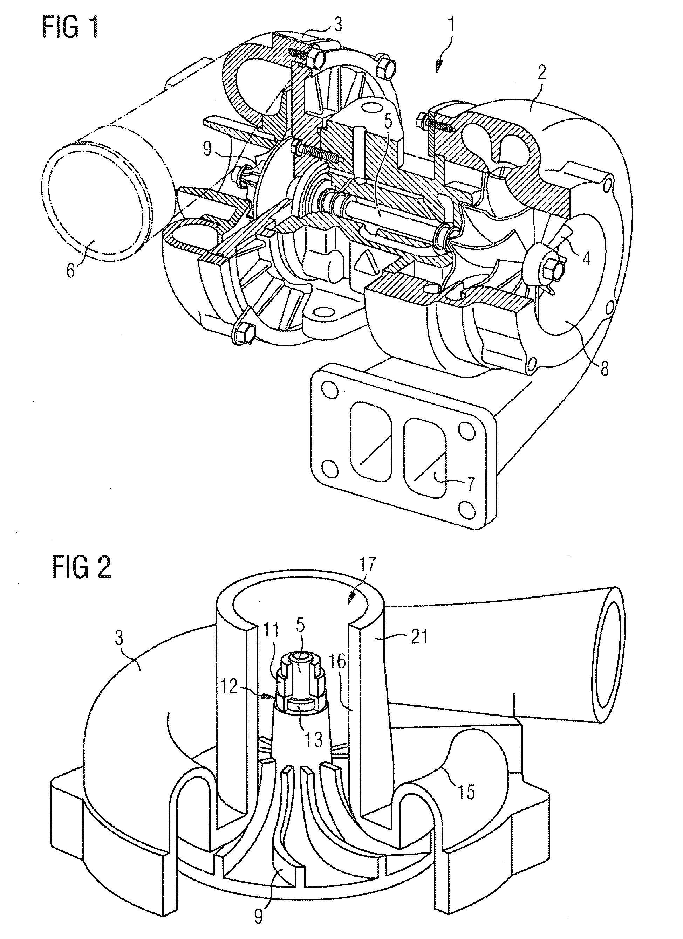

Figur 1 zeigt einen üblichen Abgasturbolader 1 mit einer Turbine 2 und einem Kompressor 3. Im Kompressor 3 ist das Kompressorrad 9 drehbar gelagert und mit der Turbowelle 5 verbunden. Auch die Turbowelle 5 ist drehbar gelagert und an ihrem anderen Ende mit dem Turbinenrad 4 verbunden. Die Kombination aus Kompressorrad 9, Turbowelle 5 und Turbinenrad 4 wird auch als Laufzeug bezeichnet. Über den Turbineneinlass 7 wird heißes Abgas von einer hier nicht dargestellten Verbrennungskraftmaschine in die Turbine 2 eingelassen, wobei das Turbinenrad 4 in Drehung versetzt wird. Der Abgasstrom verlässt die Turbine 2 durch den Turbinenauslass 8. Über die Turbowelle 5 ist das Turbinenrad 4 mit dem Kompressorrad 9 verbunden. Damit treibt die Turbine 2 den Kompressor 3 an. In den Kompressor 3 wird Luft durch den Lufteinlass 17 eingesaugt, die dann im Kompressor 3 verdichtet und über den Luftauslass 6 der Verbrennungskraftmaschine zugeführt wird.

Figur 2 zeigt den Kompressor 3 in einem Teilschnitt. In dem aufgeschnittenen Kompressorgehäuse 21 ist das Kompressorrad 9 zu erkennen. Das Kompressorrad 9 ist auf der Turbowelle 5 mit dem Befestigungselement 11 befestigt. Das Befestigungselement 11 kann zum Beispiel eine Hutmutter sein, die auf ein auf der Turbowelle 5 aufgebrachtes Gewinde aufgeschraubt wird, um das Kompressorrad 9 gegen einen Bund der Turbowelle 5 mit dieser zu verspannen. Zwischen dem Befestigungselement 11 und dem Kompressorrad 9 befindet sich das Element 12 zur Variation des Magnetfeldes. Hier ist das Element 12 zur Variation des Magnetfeldes aus einem Magnet 13 und einer Einfassung 14 aufgebaut. Das Element 12 zur Variation des Magnetfeldes wird durch das Befestigungselement 11 gegen das Kompressorrad 9 gepresst, und bei der Rotation der Turbowelle 5 dreht sich das Element 12 zur Variation des Magnetfeldes um die Rotationsachse der Turbowelle 5. Dabei erzeugt das Element 12 zur Variation des Magnetfeldes eine Änderung der magnetischen Feldstärke bzw. des magnetischen Feldgradientes in dem Sensorelement 16. Das Sensorelement 16 ist in den Sensor 15 integriert, wobei der Sensor 15 in den nachfolgenden Figuren näher beschrieben wird. Die Variation des Magnetfeldes bzw. des Feldgradienten erzeugt im Sensorelement 16 ein elektronisch verarbeitbares Signal, das proportional zur Drehzahl der Turbowelle 5 ist.

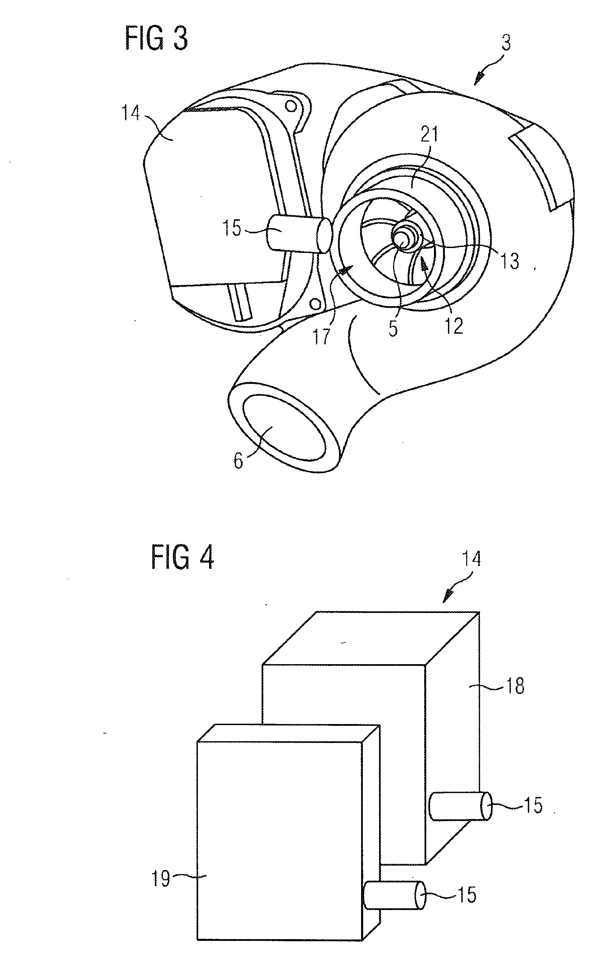

Fig. 3 zeigt den Kompressor 3 des Abgasturboladers 1. Im Lufteinlass 17 des Kompressors 3 ist die Turbowelle 5 mit einem Element zur Variation eines Magnetfeldes zu erkennen. Das Element 12 zur Variation des Magnetfeldes kann zum Beispiel ein auf der Turbowelle 5 angeordneter Stabmagnet 13 sein. Es ist aber auch denkbar, dass auf der Turbowelle 5 ein Element angeordnet ist, dass das Magnetfeld periodisch sammelt und zerstreut, wobei die Sammlung und Zerstreuung durch die Drehung der Turbowelle 5 hervorgerufen wird. Die Erzeugung des Magnetfeldes erfolgt dann zum Beispiel durch einen Stabmagneten, der im Sensor 15 angeordnet ist. Der Sensor 15 ist hier am Gehäuse 18 des Waste-Gate-Aktuators 14 angeordnet. Der Waste-Gate-Aktuator 14 öffnet das Waste-Gate-Ventil, wenn vom Sensor 15 eine zu hohe Drehzahl der Turbowelle 5 und damit des gesamten Laufzeuges (Turbinenrad 4, Turbowelle 5 und Kompressorrad 9) festgestellt wird. Bei einer Verwendung eines ausreichend starken Magneten 13 kann das Magnetfeld das Kompressorgehäuse 21 durchdringen, wenn dies beispielsweise aus Aluminium oder Kunststoff gefertigt ist. Das vom Magnet 13 erzeugte Magnetfeld wird vom Sensor 15 und dem darin enthaltenen Sensorelement 16 erfasst und einer auch im Waste-Gate-Aktuator 14 integrierten Auswerteelektronik zur Verfügung gestellt. Darüber hinaus erkennt man in Fig. 3 den Luftauslass 6 des Kompressors 3.

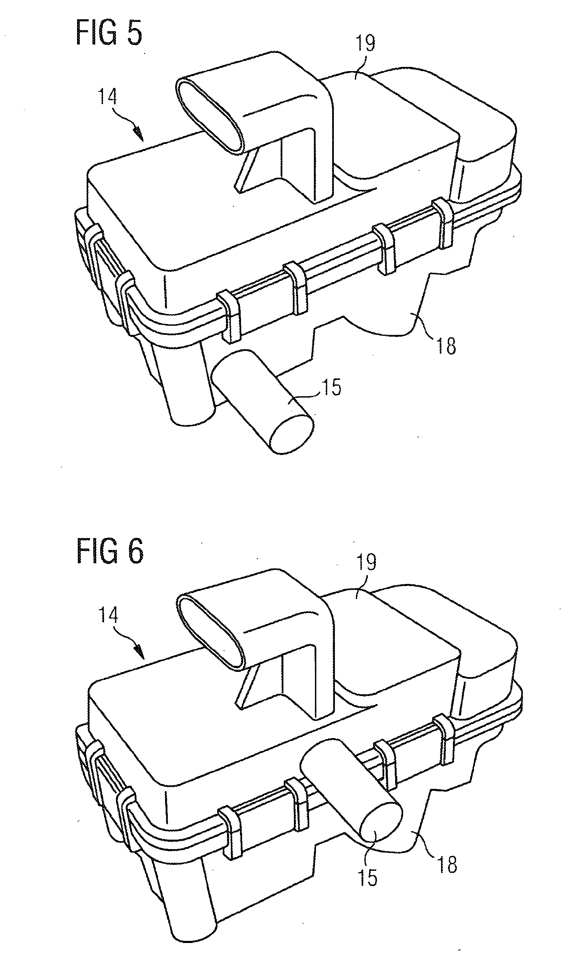

Fig. 4 zeigt den Waste-Gate-Aktuator 14 mit seinem Aktuatorgehäuse 18 und dem Aktuatordeckel 19. Sowohl an dem Aktuatorgehäuse 18 als auch an dem Aktuatordeckel 19 kann der Sensor 15 zur Erfassung der durch die Drehung des Laufzeuges hervorgerufenen Variation eines Magnetfeldes angeordnet sein. Auch Fig. 5 zeigt den Waste-Gate-Aktuator 14 mit dem Aktuatordeckel 19 und dem Aktuatorgehäuse 18. Hier ist der Sensor 15 zur Erfassung der Drehzahl des Laufzeuges am Aktuatorgehäuse 18 angeordnet.

Fig. 6 zeigt den aus Fig. 5 bekannten Waste-Gate-Aktuator 14, wobei hier der Sensor 15 zur Erfassung der Drehung des Laufzeuges am Aktuatordeckel 19 angeordnet ist.

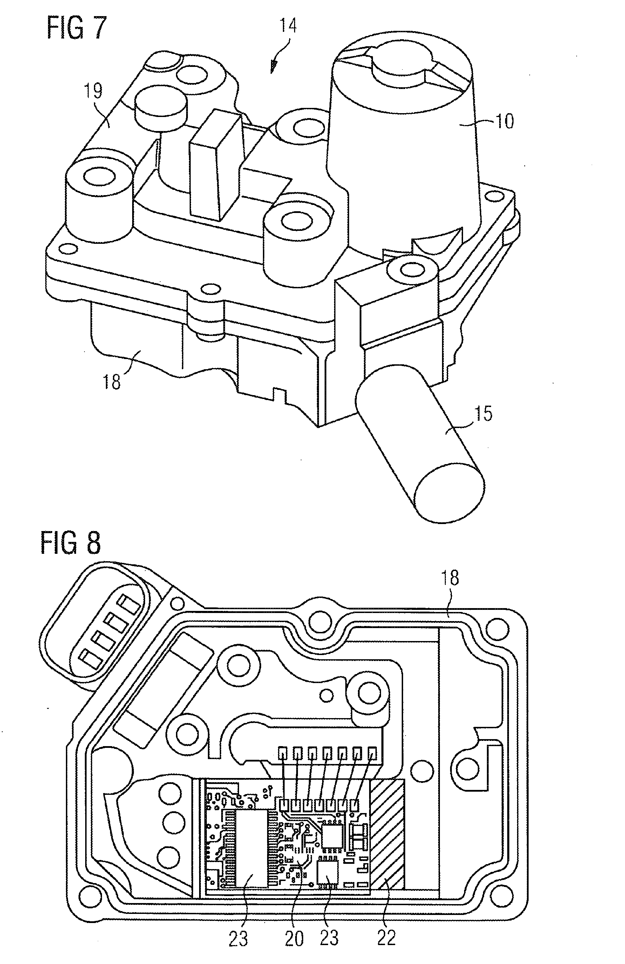

Auch in Fig. 7 ist der Waste-Gate-Aktuator 14 dargestellt. Hier erkennt man zum Beispiel im Aktuatordeckel 19 die Aufnahme für den Elektromotor 10 des Waste-Gate Aktuators 14, der das Waste-Gate-Ventil antreibt. In Fig. 7 ist der Sensor 15 zur Erfassung der Drehzahl des Laufzeuges wiederum am Aktuatorgehäuse 18 angeordnet.

Fig. 8 zeigt einen Einblick in das Aktuatorgehäuse 18. Zu erkennen ist eine Leiterplatte 20, die mit elektronischen Bauelementen 23 bestückt ist. Diese elektronischen Bauelemente 23 dienen zur Ansteuerung des Waste-Gate-Ventils. Darüber hinaus ist auf der Leiterplatte 20 ein Bereich 22 ausgebildet, der zur Aufnahme elektronischer Bauelemente 23 dient, die zur Auswertung der Signale vom Sensorelement 16 notwendig sind. Somit sind auf der Leiterplatte 20 sowohl die elektronischen Bauelemente 23 zur Ansteuerung des Waste-Gate-Ventils als auch die elektronischen Bauelemente 23 zur Auswertung der vom Sensorelement 16 erzeugten Signale integriert. Diese räumlich dichte Integration der elektronischen Bauelemente für beide Funktionen ergibt ein besonders störungssicheres System.

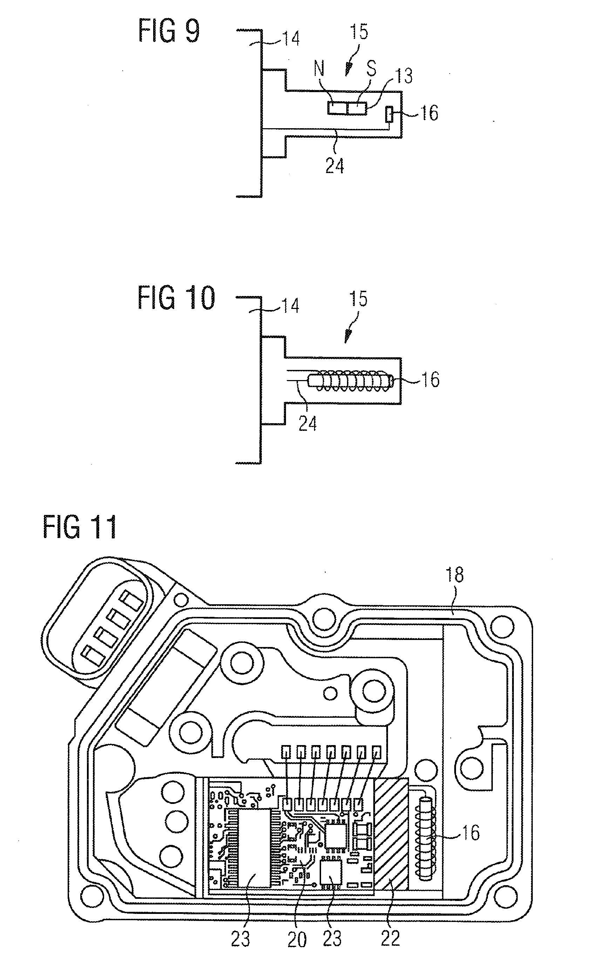

In Fig. 9 ist beispielhaft der Aufbau des Sensors 15 zu erkennen. Der Sensor 15 ist an dem Waste-Gate-Aktuator 14 angeordnet und er beinhaltet einen Permanentmagnet 13 mit einem Nordpol N und einen Südpol S sowie ein Sensorelement 16, das beispielsweise als Hallsensor oder magnetoresistiver Sensor ausgebildet sein kann. Das Sensorelement 16 ist mit elektrischen Leitern 24 mit den in Fig. 8 dargestellten elektronischen Bauelementen 23 verbunden.

Auch Fig. 10 zeigt einen Sensor 15, der an dem Waste-Gate-Aktuator 14 angebracht ist. Im Sensor 15 nach Fig. 10 ist ein Sensorelement 16 angeordnet, das als induktives Sensorelement ausgebildet ist. Induktive Sensorelemente umfassen in der Regel einen Eisenkern sowie eine darauf angeordnete Spule. Auch hier sind wiederum die elektrischen Leiter 24 zu erkennen, die das Sensorelement 16 mit den elektronischen Bauelementen 23 verbinden.

Fig. 11 zeigt das geöffnete Aktuatorgehäuse 18 mit der Leiterplatte 20, die sowohl die elektronischen Bauelemente 23 für den Waste-Gate-Aktuator als auch im Bereich 22 die elektronischen Bauelemente für den Sensor 15 aufnimmt. Hier ist das Sensorelement 16 im Aktuatorgehäuse 18 angeordnet, wobei das Aktuatorgehäuse 18 aus einem Material besteht, dass die magnetischen Feldlinien nicht abschirmt. Dieses Material kann zum Beispiel Aluminium oder Kunststoff sein. Die Integration des Sensors 15 zur Erfassung der Drehzahl des Turboladers in den Waste-Gate-Aktuator 14 bringt eine Reihe von Vorteilen gegenüber der separaten Anordnung des Sensors 15 am Turbolader 1. Durch die Integration des Sensors 15 in den Waste-Gate-Aktuator 14 erfolgen Materialeinsparungen und das Gesamtsystem wird funktionssicherer, da die Integration der elektronischen Bauteile auch auf einer Leiterplatte 20 erfolgen kann und die gesamte Schaltung sowie das Sensorelement 16 in einem Gehäuse untergebracht werden können, wodurch äußere elektromagnetische Störungen ihren Einfluss auf das System verlieren.

Als weiter Vorteil der Anordnung des Sensors 15 im oder am Aktuatorgehäuse (18) oder im oder am Aktuatordeckel (19) ist die hier herrschende Temperatur zu nennen. Abgasturbolader 1 sind thermisch hoch belastete Bauteile, in denen Temperaturen bis 1000°C entstehen. Mit bekannten Sensorelementen 19, wie zum Beispiel Hall-Sensoren oder magnetoresistive Sensoren, kann bei diesen Temperaturen nicht gemessen werden. Im oder am Aktuatorgehäuse (18) oder im oder am Aktuatordeckel ergeben sich wesentlich geringere Temperaturbelastungen. Dennoch reicht das magnetische Feld aus, um eine Messung der Drehzahl des Laufzeuges zu erhalten. Da die beschriebene Anordnung im Kalten Bereich im oder am Aktuatorgehäuse (18) oder im oder am Aktuatordeckel (19) erfolgt, können Sensorelemente 16 verwendet werden, die preiswert und kommerziell erhältlich sind. Aufgrund der relativ geringen Temperaturbelastung müssen an die Sensorelemente 16 keine außergewöhnlich hohen Anforderungen bezüglich ihrer Temperaturstabilität gestellt werden.

## Patentansprüche

1. Waste-Gate-Aktuator (14) für einen Abgasturbolader (1), mit einem Aktuatorgehäuse (18) und einem Aktuatordeckel (19), wobei in dem Waste-Gate-Aktuator (14) ein Element zur Betätigung des Waste-Gate-Ventils und elektronische Bauelemente (23) zur Ansteuerung des Elements zur Betätigung des Waste-Gate-Ventils angeordnet sind, d a - **durch gekennzeichnet**, dass im oder am Aktuatorgehäuse (18) oder im oder am Aktuatordeckel (19) ein Sensor (15) zur Erfassung der, durch die Drehung des Laufzeugs hervorgerufenen, Variation eines Magnetfeldes angeordnet ist.

2. Waste-Gate-Aktuator (14) für einen Abgasturbolader (1) nach Anspruch 1, **dadurch gekennzeichnet , dass** im Aktuatorgehäuse (18) eine Leiterplatte (20) angeordnet ist, auf der die elektronischen Bauelemente (23) zur Ansteuerung des Elements zur Betätigung des Waste-Gate-Ventils und die elektronischen Bauelemente (23) zur Auswertung der Sensorsignale angeordnet sind.

3. Waste-Gate-Aktuator (14) für einen Abgasturbolader (1) nach Anspruch 1 oder 2, **dadurch gekennzeichnet, dass** der Sensor (15) ein magnetoresitives Sensorelement (16) aufweist.

4. Waste-Gate-Aktuator (14) für einen Abgasturbolader (1) nach Anspruch 1 oder 2, **dadurch gekennzeichnet, dass** der Sensor (15) ein Hall-Sensorelement (16) aufweist.

5. Waste-Gate-Aktuator (14) für einen Abgasturbolader (1) nach Anspruch 1 oder 2, **dadurch gekennzeichnet, dass** der Sensor (15) ein induktives Sensorelement (16) aufweist.

6. Waste-Gate-Aktuator (14) für einen Abgasturbolader (1) nach mindestens einem der vorgenannten Ansprüche, **dadurch gekennzeichnet, dass** das Aktuatorgehäuse (18) und/oder der Aktuatordeckel (19) aus Aluminium bestehen.

7. Waste-Gate-Aktuator (14) für einen Abgasturbolader (1) nach mindestens einem der vorgenannten Ansprüche, **dadurch gekennzeichnet, dass** das Aktuatorgehäuse (18) und/oder der Aktuatordeckel (19) aus einem Kunststoff bestehen.

## Claims

1. Waste gate actuator (14) for an exhaust gas turbocharger (1), comprising an actuator housing (18) and an actuator cover (19), wherein an element for actuating the waste gate valve and electronic components (23) for controlling the element for actuating the waste gate valve are arranged in the waste gate actuator (14), **characterized in that** a sensor (15) for sensing the variation in a magnetic field which is produced by the rotation of the rotating parts is arranged in or on the actuator housing (18) or in or on the actuator cover (19).

2. Waste gate actuator (14) for an exhaust gas turbocharger (1) according to Claim 1, **characterized in that** a printed circuit board (20), on which the electronic components (23) for controlling the element for actuating the waste gate valve and the electronic components (23) for evaluating the sensor signals are arranged, is arranged in the actuator housing (18).

3. Waste gate actuator (14) for an exhaust gas turbocharger (1) according to Claim 1 or 2, **characterized in that** the sensor (15) has a magnetoresistive sensor element (16).

4. Waste gate actuator (14) for an exhaust gas turbocharger (1) according to Claim 1 or 2, **characterized in that** the sensor (15) has a Hall sensor element (16).

5. Waste gate actuator (14) for an exhaust gas turbocharger (1) according to Claim 1 or 2, **characterized in that** the sensor (15) has an inductive sensor element (16).

6. Waste gate actuator (14) for an exhaust gas turbocharger (1) according to at least one of the preceding claims, **characterized in that** the actuator housing (18) and/or the actuator cover (19) are composed of aluminum.

7. Waste gate actuator (14) for an exhaust gas turbocharger (1) according to at least one of the preceding claims, **characterized in that** the actuator housing (18) and/or the actuator cover (19) are composed of a plastic.

## Revendications

1. Actionneur de soupape de décharge (14) pour turbocompresseur (1) à gaz d'échappement, comportant un boîtier (18) d'actionneur et un couvercle (19) d'actionneur, où, dans l'actionneur de soupape de décharge (14), sont disposés un élément destiné à la commande de la soupape de décharge et des composants électroniques (23) pour le contrôle de l'élément destiné à la commande de la soupape de décharge, ledit actionneur étant **caractérisé par le fait qu'**un détecteur (15) destiné à détecter la variation d'un champ magnétique provoquée par la rotation de l'organe mobile est monté dans ou sur le boîtier (18) de l'actionneur ou dans ou sur le couvercle (19) de l'actionneur.

2. Actionneur de soupape de décharge (14) pour turbocompresseur (1) à gaz d'échappement selon la revendication 1, **caractérisé par le fait qu'**une carte à circuits imprimés (20) est disposée dans le boîtier (18) de l'actionneur, sur laquelle carte sont montés les composants électroniques (23) pour le contrôle de l'élément destiné à la commande de la soupape de décharge et les composants électroniques (23) destinés à l'évaluation des signaux du détecteur.

3. Actionneur de soupape de décharge (14) pour turbocompresseur (1) à gaz d'échappement selon la revendication 1 ou 2, **caractérisé par le fait que** le détecteur (15) comporte un élément détecteur magnéto résistif (16).

4. Actionneur de soupape de décharge (14) pour turbocompresseur (1) à gaz d'échappement selon la revendication 1 ou 2, **caractérisé par le fait que** le détecteur (15) comporte un élément détecteur de Hall (16).

5. Actionneur de soupape de décharge (14) pour turbocompresseur (1) à gaz d'échappement selon la revendication 1 ou 2, **caractérisé par le fait que** le détecteur (15) comporte un élément détecteur à induction (16).

6. Actionneur de soupape de décharge (14) pour turbocompresseur (1) à gaz d'échappement selon au moins l'une des revendications précédentes, **caractérisé par le fait que** le boîtier (18) de l'actionneur et / ou le couvercle (19) de l'actionneur sont en aluminium.

7. Actionneur de soupape de décharge (14) pour turbocompresseur (1) à gaz d'échappement selon au moins l'une des revendications précédentes, **caractérisé par le fait que** le boîtier (18) de l'actionneur et / ou le couvercle (19) de l'actionneur sont en matière plastique.
